# EUROPEAN PATENT SPECIFICATION

(11) **EP 3 397 005 B1**
(45) Date of publication and mention of the grant of the patent: **08.04.2020**
(21) Application number: 18169286.4
(22) Date of filing: 25.04.2018
(51) Int. Cl.: H04W 36/00

(54) **LOW POWER RRC CONNECTION ESTABLISHMENT**
AUFBAU EINER RRC-VERBINDUNG MIT NIEDRIGER LEISTUNG
ÉTABLISSEMENT DE CONNEXION RRC À FAIBLE PUISSANCE

(30) Priority: 25.04.2017 EP 17168031
(43) Date of publication of application: 31.10.2018
(73) Proprietor: IPCom GmbH & Co. KG, 82049 Pullach (DE)
(72) Inventor: BIENAS, Maik, 38170 Schöppenstedt (DE); HANS, Martin, 31162 Bad Salzdetfurth (DE)
(74) Representative: Tomlinson, Edward James

(56) References cited:
- US-A1- 2016 353 371
- INTEL CORPORATION: "Benefits of Light connection over Suspend-Resume procedure", 3GPP DRAFT; R2-163631_LIGHTCONN__INTEL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Nanjing, China; 20160523 - 20160527 22 May 2016 (2016-05-22), XP051105065, Retrieved from the Internet: URL:http://www.3gpp.org/ftp/Meetings_3GPP_ SYNC/RAN2/Docs/ [retrieved on 2016-05-22]

## Description

The present invention relates to a mechanism for establishing a connection between a user equipment, UE, device and a base station suitable for UEs with a low power consumption.

In legacy cellular communication systems like GSM, UMTS and LTE, devices (UEs) connect to base stations (eNBs). The eNBs each span one or more cells which may or may not overlap. The eNBs, collectively referred to as the radio access network (RAN), connect to the core network, which controls the RAN and the services provided to the UEs. RAN and core network build a complete cellular mobile communication network (PLMN). The connection between a single UE and an eNB is established by using a radio resource control (RRC) protocol, thus it is called an RRC connection.

A UE that has an RRC connection established is in connected state or connected mode. It has at least a signalling connection for exchange of control messages between the UE and the eNB. It may have additional connections used to exchange user data between the cellular network and the UE. In some cellular systems sub-states of the connected mode are defined that reflect different states the UE can have with respect to its connections and its means to transmit or receive data, however all sub-states of connected mode require an RRC connection established.

In connected mode, a mobile device will change cell or its serving eNB only under control by the currently serving eNB.

A "switched on" UE that does not have an RRC connection established is in idle mode. There is no RRC connection for the UE to any eNB. The UE may change its cell autonomously based on measurements of neighbour cells and cell re-selection criteria which are described in the respective standard of the cellular system and which are additionally configured by the operator during a previous connection to the network and by system information broadcast comprising configuration information for re-selecting from that cell to another cell.

If in idle mode, the UE has to listen to potential paging from the network in order to be reachable for mobile terminated (MT) calls or data transfer. The network may configure the UE with a list of one or more tracking areas (TAs) in which it may be paged by the network. A UE leaving the configured TAs by selecting a cell outside these TAs will connect to the selected eNB, setup an RRC connection, use it to inform the network about its new location and potentially receive a new list of new TAs to enable autonomous mobility in idle mode again.

The transition from connected mode to idle mode is done by command of the eNB, e.g. delivered in an RRC connection release message of the RRC protocol. Implicit or autonomous transition to idle mode by a UE is only done in failure case, e.g. radio link failure. In idle mode, the UE deletes the main context information, i.e. the RRC connection, established links and bearers and the security setup between UE and eNB.

The transition from idle mode to connected mode is triggered by the UE requesting an RRC connection by sending an RRC connection request to the eNB. The eNB as a result may command the UE to perform the transition with an RRC connection setup message that contains all parameters necessary to setup the connection and start data transfer. The UE acknowledges the RRC connection setup with a RRC connection confirm message. After that, in order to secure the connection and setup further links and bearers for data transfer, the procedure continues with message exchange for security setup and a reconfiguration of the RRC connection to establish appropriate resources for data transfer.

If the UE moves in idle mode between cells the transition from idle to connected mode may be performed in a different cell than the one which ordered the UE to go to idle mode. In that case, before sending the RRC connection setup message the new eNB fetches information from the old eNB if possible. One example of such information is the UE permanent ID (IMSI) if the UE only provided a temporary ID to the new eNB.

For idle mode mobility, a UE regularly measures signals of neighbour cells in order to determine whether any cell is better than the one the UE currently camps on (current cell). The measurements are performed if the received signal of the current cell is below a threshold. The measurements of the neighbour cells are input to a calculation of a cell ranking, the calculation includes a comparison of measurements with threshold values and hysteresis parameters and comparing timers with timer expiry values, the values provided by the current cell in system information or in previously received configuration information. The highest ranked cell is selected by the UE as new cell to camp on if after the calculation, it is different from the current cell. The calculation prevents a UE from switching the camped-on cells too often or to hop several times between two cells (ping-pong) while ensuring the UE is always camped on a cell with high enough receive quality to maximize reachability of the UE.

For measuring the receive quality of cells, a UE needs to synchronize to a candidate cell and receive reference signals that are transmitted by all eNBs for such measurements. The synchronization in LTE in done in two steps: First after tuning the radio to a specific supported frequency band, the UE searches for the primary synchronization signal (PSS) and secondary synchronization signal (SSS). The PSS is one of 3 signals and the SSS one of 168 signals. After successful detection of PSS and SSS the UE derives from these signals the Physical Cell ID (PCI) of which 504 exist in LTE.

Once the PCI is known the UE knows the location of the cell-specific reference signals and is therefore able to estimate the signal level or quality of the candidate cell.

The PCI is not only used for synchronization but also to provide UEs with the information whether a candidate cell is applicable for them at all with respect to specific cells that are reserved to be used by a closed subscriber group (CSG). The network may configure the UE with specific PCIs or a PCI range that is used for CSG cells by the operator. A UE that is not part of any CSG may detect a cell with a PCI in the indicated PCI range for CSG cells and refrain from handling the cell as candidate cell.

For LTE currently a new feature called "light connection" (LC) is standardized, wherein the term "light" is used in the sense of "reduced" rather than "optical", which is especially useful for cellular mobile devices that need to get by with a single battery for a very long time, e.g. months or years. The abbreviation "LC" is also used for "low cost" or "low complexity" in 3GPP documents and these concepts may overlap with those referred to as "light connection" but in this specification, LC refers to light connection. The feature is also useful for networks that have to deal with a very high number of devices. In future, machine type communication (MTC) will cause a large fraction of overall network traffic and very high numbers of respective devices are expected to connect to the mobile networks. These devices are extremely power limited, thus the new feature "light connection" is tailored for MTC devices and respective serving networks.

The LC feature enhances the RRC connection establishment and the idle mode so that a major part of the signalling currently needed to establish or re-establish an RRC connection is spared. For LC, the UE on its transition from connected mode to idle mode receives from the eNB an information that it should keep the current radio access network

(RAN) context, i.e. the parameters of the current RRC connection, the established links and bearers and the security context. In addition, the UE receives an ID that identifies the respective context in the eNB while the UE is in idle mode.

On its transition back to connected mode with the LC feature the UE transmits to the eNB a new message RRC connection resume request including the context ID. The eNB may accept the resumption of the stored context and inform the UE in an RRC connection resume message to continue the RRC connection, all bearers and links and the security setup. The RRC connection is thus quickly continued using only very limited signalling resources as no security or bearer setup has to occur. This saves computation and transmit power in the eNB and the UE. In short, the LC feature allows eNB and UE to keep the RAN context required for an RRC connection during periods of idle mode and reuse the context in connected mode without the need to setup the RRC connection anew.

As described for legacy LTE above, if the UE moves in idle mode between cells the transition from idle to connected mode may be performed in a different cell than the one which ordered the UE to go to idle mode. In that case, after the UE requested resumption of an RRC connection and before sending the RRC connection resume message the new eNB fetches the respective context from the old eNB if possible.

The LC is defined so that it is a decision of the eNB whether to accept the resumption of an RRC connection. The reply to an RRC connection resume request may alternatively be a usual RRC connection setup message which causes the UE to drop or release the stored context and perform the usual RRC connection setup procedure. This may for example be the case when a new eNB cannot fetch the RAN context of the UE from the old eNB after UE idle mode mobility.

The LC feature is standardized so that UEs with the LC feature can indicate their LC capability to the eNB so that the eNB can use it in the described way. An eNB that is not capable of the LC feature but is generally implemented according to the new standard will simply not configure the UE to use the feature. Another eNB that is not capable of the LC feature, e.g. because it has an older version of the standard implemented, will not understand the UE capability and will react as if the feature did not exist or as if the UE did not provide the respective capability, which does not cause any problems.

In contrast, idle mode mobility of an LC capable UE from an LC capable eNB to an eNB that is not LC capable may cause problems that are currently not solved by the standard or other publications. 3GPP document R2-1702349 relating to 3GPP standard 36.300 indicates that a UE with a light RRC connection transitions to RRC IDLE upon reselecting a cell which does not support light RRC connection.

A UE keeping its context according to the LC feature during idle mode, moving to an eNB which is not LC capable and requesting RRC connection resumption from that eNB will not be understood by that eNB. The RRC connection resume request message will not be replied to by the eNB and the UE will perform actions defined for failure to access a cell, e.g. bar the cell or refrain from accessing the cell for a defined time which may cause serious service interruptions for the UE.

WO 2016/130264 A1 describes an eNB retaining context information such as data radio bearer and security information with respect to a device while the device is inactive. The eNB may transmit with an RRC connection release message an indicator for a context the device is to keep while it is in idle mode. When requesting a connection setup a UE may request to use a lightweight setup in which the UE provides an identifier of the UE and other connection information.

WO 2015/105846 A1 describes an state for a UE which provides the possibility for data transmission to background application on the UE. The state is a power saving state that does not require the UE to change to an active state before data transmission. A sleep circle is described together with methods to use grant-free short-term link connections to transmit data in the power saving state.

EP 2 757 856 A1 describes methods to reduce signaling overhead for connection establishment. An RRC connection between a UE and an eNB is released by transitioning from an active state to an idle state while maintaining the UE context in both entities. The context is identified in both the UE and the eNB by a context identifier and the RRC connection is re-established when transitioning back from the idle state to the active state.

WO 2015/139666 A1 describes a cell selection method for low cost machine type communication UEs in which information as to whether a base station is capable of supporting low cost machine type communication is transmitted in the system information of a cell. If a cell does not support low cost machine type communication, the cell is considered as barred.

3GPP standard document TS 36.304 V14.2.0 proposes a priority system for UEs wishing to receive multimedia broadcast-multicast service, MBMS, or single cell point to multipoint, SC-PTM, messages in which the frequencies of cells not broadcasting the messages are given a lowest priority. As indicated in R2-1702349, in order to receive MBMS messages when changing cells, frequencies providing these services are given highest priority. Information about neighbouring cells is provided in X2 signalling.

US2016/353371 A1 is about cell selection and cell reselection.

It is an objective of the present invention to provide means to prevent UEs supporting the LC feature and having a RAN context stored in idle mode from accessing an eNB that does not support the feature. An alternative to prevention is to reduce the likelihood of a UE to access such cell in that case.

It is a further objective to provide means for a UE to detect support of the LC feature by an eNB to request establishment of an RRC connection in the most efficient way dependent on the detection result.

The present invention provides a method of operating a user equipment, UE, device suitable for connection to a mobile communications network, the method comprising receiving information from a plurality of base stations of the mobile communications network, the information received from a base station providing the UE device with an indication as to whether that base station supports resuming a radio resource control, RRC, connection; using the information to construct a ranking list of the plurality of base stations according to a suitability of the base stations for RRC connection resumption operation; and selecting from the ranking list a second base station to which a radio resource control connection resume message is sent for re-establishing an RRC connection previously released by a first base station.

In a further aspect, the invention provides a method of operating a user equipment, UE, device suitable for connection to a mobile communications network, the method comprising receiving context information from a first base station of the mobile communication network and storing the context information in the UE device; receiving, using the context information, support information from a second base station of the mobile communications network, the support information providing the UE device with an indication as to whether the second base station supports resuming a radio resource control, RRC, connection; selecting, based on the support information, whether to request from the base station (i) the setup of a new RRC connection in which the context information in the UE device is discarded, and a connection to the second base station is set up based on second context information received from the second base station, or (ii) the resumption of an RRC connection previously released by another base station in which an RRC connection resume request message is transmitted to the second base station, the connection resume request message comprising an identifier of the context information, and a connection to the second base station is set up based on the context information.

In one aspect of the invention, an eNB provides information to UEs potentially accessing a cell spanned by the eNB, information indicating whether the eNB supports resuming an RRC connection of a UE (i.e. supports the LC feature), and a UE receiving that information determining from the information whether to request from the eNB
resuming an RRC connection according to a stored RAN context, or
setup of a new RRC connection.

Resuming comprises establishing an RRC connection according to a RAN context previously established between a UE and an eNB while the UE was in connected mode and stored in the UE and an eNB while the UE is in idle mode.

In another aspect of the invention an eNB provides to the UE one or more physical cell IDs or a physical cell ID range that is used only by eNBs supporting the resuming an RRC connection of a UE, and the information provided by the eNB is the physical cell ID of the eNB.

In a related aspect of the invention, a UE having a RAN context stored and performing cell re-selection procedure in idle mode detecting from the physical cell ID of a candidate cell whether the eNB spanning the cell supports the resuming an RRC connection of a UE and the UE adapting the ranking of the candidate cell in the cell re-selection procedure.

The adapting the ranking may comprise applying different threshold values to measurements of cells supporting the resuming an RRC connection of a UE and cells not supporting it.

The adapting the ranking may comprise applying different timer values that are applied for cell selection to cells supporting the resuming an RRC connection of a UE and cells not supporting it.

Embodiments of the invention will now be described, by way of example only, with reference to the accompanying drawings in which:
- Fig. 1: shows a schematic representation of a mobile communications network;
- Fig. 2: is a message sequence chart for resuming an RRC connection;
- Fig. 3: is a further message sequence chart; and
- Fig. 4: is a still further exemplary message sequence chart.

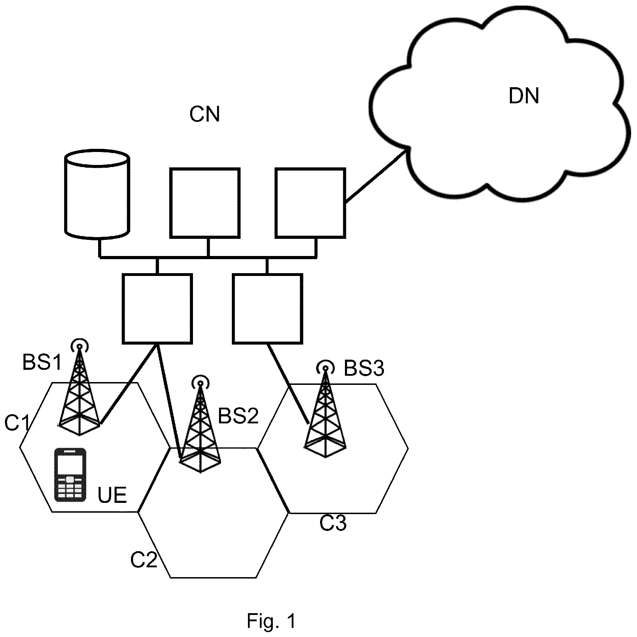

Referring to Fig. 1, there is shown a simplified mobile cellular communication network connected to a data network DN. The mobile cellular communication network comprises a core network CN which itself consists of multiple servers and routers and one or more data bases. Fig. 1 shows a sketch of a core network with interconnected entities for illustration purposes only without restricting any core network topology or any number, type and connection of entities within the core network.

The mobile cellular communication network comprises base stations, or eNBs, BS1, BS2 and BS3 each spanning a cell C1, C2 and C3, respectively. The number of base stations and cells per base station in Fig. 1 is chosen for illustrative purposes only and is not restricted in any way. Further, the cells are depicted as non-overlapping hexagons, but they are in fact overlapping, at least partially. Fig. 1 also shows a UE UE1 residing in cell C1. The UE is considered to be mobile, it can thus move, e.g. between cells C1, C2 and C3.

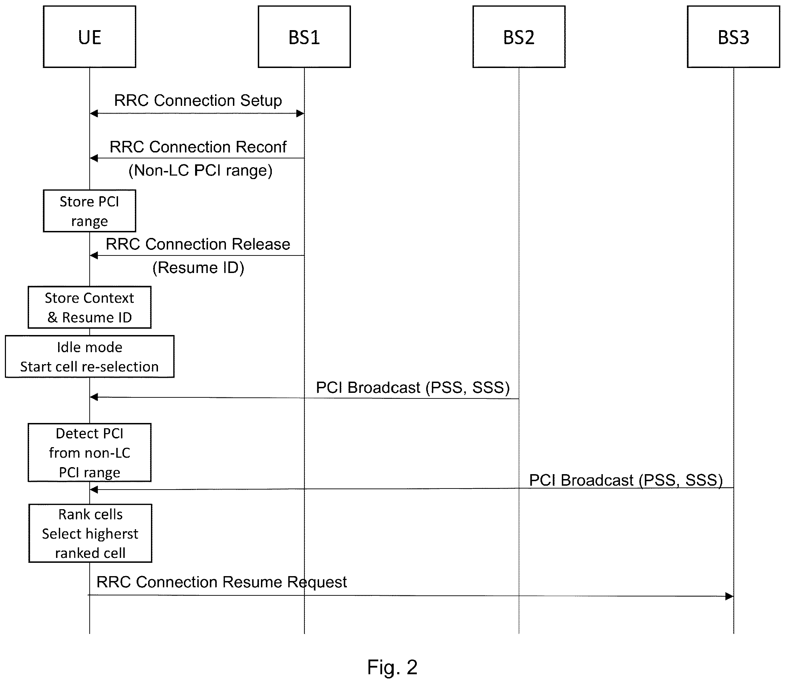

Fig. 2 depicts one aspect of the invention. This embodiment focusses on the aspect of adapting the ranking of candidate cell during cell re-selection based on the cell's support of the LC feature. In this embodiment, the UE is configured with a PCI range that indicates cells that don't support the LC feature and it is shown how the UE behaves in idle mode when it moves between cells supporting and not supporting the LC feature. A UE establishes an RRC connection with eNB BS1, shown in Fig. 2 as an RRC connection setup procedure (with a double arrow) without details. At any point after the RRC connection is established and while the UE is in connected mode, the UE may receive a configuration according to the invention, shown in an exemplary manner as an RRC connection reconfiguration message. The configuration contains information about a physical cell ID (PCI) range that is solely used by eNBs of the current network that do not support resuming an RRC connection of a UE, i.e. these eNBs do not support the LC feature. The network operator guarantees the respective distribution of PCIs between cells and the UE stores the received PCI range.

Other alternatives could foresee the PCI range information to indicate a PCI range solely used by eNB supporting resuming an RRC connection of a UE. Yet another embodiment could replace the PCI range with a list of single PCI values to indicate single values used by eNBs supporting or not supporting the resuming an RRC connection of a UE.

Now, at any point later the RRC connection is released by eNB BS1 with an RRC connection release message comprising an indicator that the UE is to store the current RAN context to enable resuming. The indication is for example done with provisioning of a resume ID in the RRC connection release message, the resume ID to be used by the UE when resuming an RRC connection.

As a result of the message received by the UE, the UE stores the current context (if not already done), goes to idle mode and start selecting and re-selecting a cell to camp on. Fig. 2 assumes cell C2 of eNB BS2 to be a candidate cell for the UE, thus the UE synchronizes to cell C2 and determines the PCI of the cell from primary and secondary synchronization signals broadcasted by the eNB.

A comparison of the PCI of cell C2 with the stored PCI range results in the determination that C2 does not support the resuming an RRC connection of a UE. According to this invention, the calculation of the rank of cell C2 in comparison to cells supporting the feature is reduced by adapting the parameters of the ranking algorithm.

Embodiments for adaption of the ranking parameters are thresholds specific for cells not supporting the feature or supporting the feature. The thresholds may be for comparison with signal level or signal quality measurements (e.g. RSRP or RSRQ according to 3GPP TS 36.214) and for allowing or disallowing a cell to be candidate in ranking. An example could be a higher receive quality with which a candidate cell not supporting the feature has to be received by a UE than the receive quality applied to other cells. Other embodiments may add additive or multiplicative parameters to calculations that lead to reduced ranking of cells that do not support the feature. The parameter values that are to be applied in the ranking algorithm may be configured in a dedicated configuration similar to the PCI range in the RRC connection reconfiguration message described further above. The parameter values may in addition or alternatively be transmitted by the current or any other cell in system information broadcast. Yet another alternative may adapt timer values so that e.g. cells not supporting the feature have to be received above a certain receive threshold for a longer time than other cells.

Yet another embodiment would be to simply skip candidate cells that indicate by their PCI that they do not support resuming an RRC connection of a UE.

In the example of Fig. 2, cell C2 of eNB BS2 is determined to not support the LC feature and its ranking is calculated accordingly with a respective adaption of parameters. Then cell C3 of eNB BS3 is received as a candidate cell. The UE synchronizes to the cell and receives the PCI of cell C3 from which the UE determines that cell C3 supports the resuming an RRC connection of a UE. According to this invention and assuming respective receive quality and other measurements of cell C3 in the UE the ranking of all candidate cells is calculated.

As a result of this invention, cell C3 may be selected by the UE and the UE sends an RRC connection resume request message to eNB BS3. Without the invention, the likelihood of selecting cell C2 of eNB BS2 to be selected would be higher. It would thus be more likely that the UE has to use a full RRC connection setup without use of the invention. Therefore, the advantages of the stored context could not be used without the inventive means, i.e. the time to re-establish the connection is increased and resources e.g. for configuring the connection are wasted.

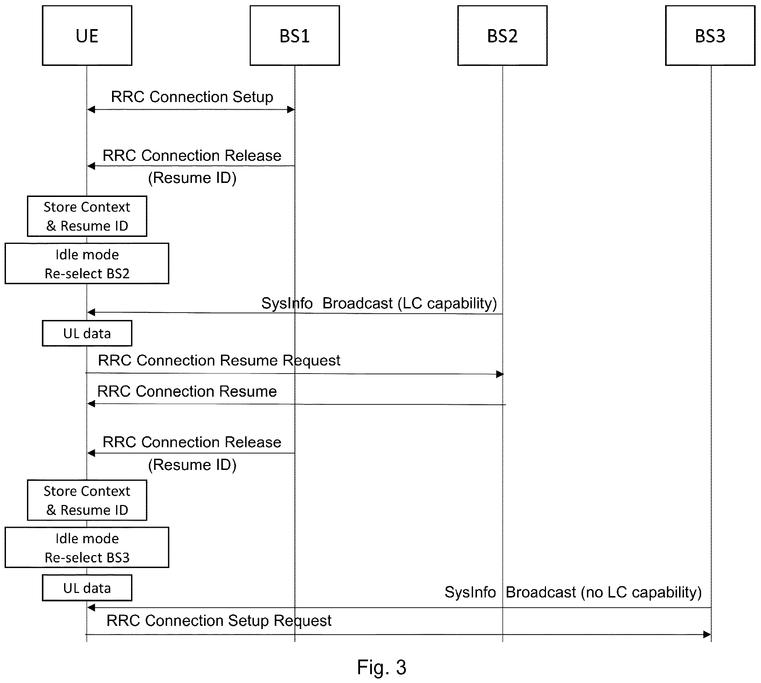

The advantage of the invention in this embodiment is, that the UE will detect the LC support of a cell in an early stage of the cell selection (compared to the embodiment according to Fig. 3) which will accelerate the cell selection procedure. It is therefore the preferred embodiment.

Fig. 3 shows another embodiment of the present invention. This embodiment focusses on the aspect of selecting the most efficient way to request an RRC connection from a selected cell based on the cell's support of the LC feature. In this embodiment, the LC feature is indicated to the UE via system information broadcast. Similar to Fig. 2, it is assumed that a UE connects to eNB BS1 and the RRC connection is later terminated with an indication to store the RAN context for later resumption. The UE goes to idle mode and starts regular cell re-selection based on measurements.

Now it is assumed the UE selects cell C2 of eNB BS2 to camp on. This selection includes synchronizing to the cell and thus receiving a PCI, details are omitted. The UE could detect the capability of eNB BS2 to support resuming an RRC connection, similar to the embodiment of figure 1, from the PCI. But this embodiment is described with the capability information delivery via system information broadcast. The UE reads the system information broadcast to receive parameters necessary to access the cell. According to this invention eNB BS2 may indicate in system information its capability to support resuming an RRC connection of a UE. Now, in this example, the UE may be triggered to establish an RRC connection to the current cell by the arrival of UL data to be transmitted, e.g. from an application on the UE, or by reception of paging in case of DL data is pending transmission.

According to this invention the UE determines the most efficient way to request an RRC connection form eNB BS2 based on the received indication of whether eNB BS2 supports resuming an RRC connection. If support is indicated, the UE request a resumption of the former RRC connection whose context information has been stored. If the support is not indicated, the UE requests setup of a new RRC connection.

Thus, in the current embodiment, based on the received indicator of RRC resume support in cell C2, the UE uses an RRC connection resume request message and the eNB BS2 may accept the resumption and reply with an RRC connection resume message. Thus, the RRC connection is restored very efficiently.

At a later point the RRC connection is released by eNB BS2 again with an indication to store the RAN context for later resumption. The UE again stores the context, goes to idle mode and start cell re-selection. It is assumed that now the UE selects cell C3 and receives system information broadcast from respective eNB BS3 not containing any information about support of RRC connection resumption.

Again, according to this invention the UE determines the most efficient way to request an RRC connection form eNB BS2 based on an indication of whether eNB BS3 supports resuming an RRC connection. The missing information about RRC connection resumption in the received system information broadcast is an indicator for eNB BS3 not supporting the feature.

Thus, if now an RRC connection is required, the UE uses the legacy RRC connection setup request message towards eNB BS3 and thus ensures it is understood and an RRC connection is established without degradation of the service, yet not as efficient as with eNB BS2.

The advantage of the invention in this embodiment is that the UE ensures its request to establish an RRC connection is understood by the base station and does not lead to a failure case that increases the signalling overhead beyond the normal signalling for RRC connection establishment.

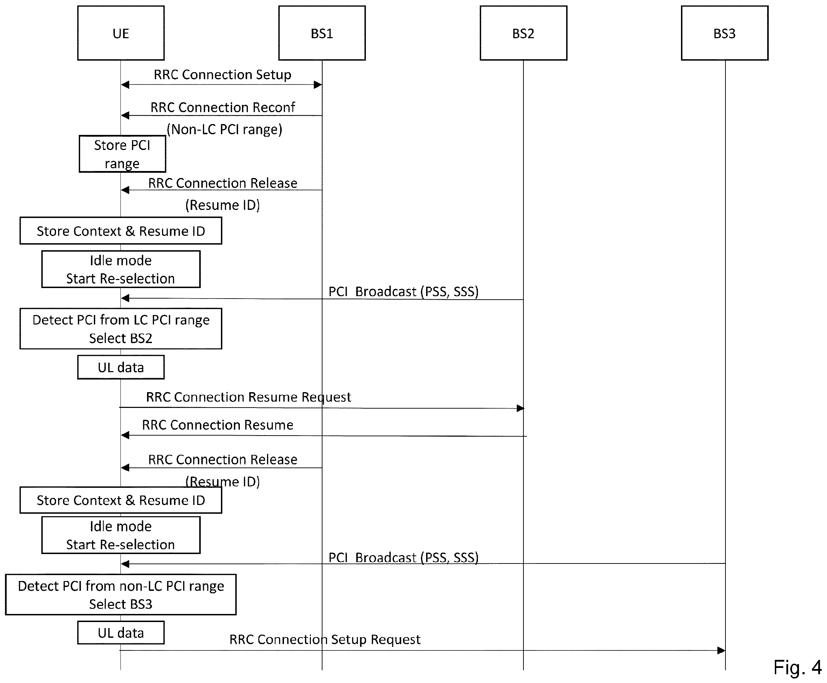

A further embodiment of this invention is shown in Fig. 4. Again, this embodiment focusses on the aspect of selecting the most efficient way to request an RRC connection from a selected cell based on the cell's support of the LC feature. In contrast to the embodiment described in relation to Fig. 3, in this embodiment the UE receives information about the support of the LC feature in a cell during synchronization. Similar to the embodiment described in relation to Fig. 2, the UE receives the PCI of the cell and determines the LC capability through comparison with PCI information received during connected mode. This embodiment can thus be understood as a combination of the embodiments of Figs. 2 and 3.

As depicted in Fig. 2, the UE receives during RRC connection with eNB BS2 a PCI range used solely by cells that do not support the LC feature. The PCI information is stored and when the RRC connection is released the UE and eNB store a context and a Resume ID relating to that context. During idle mode the UE performs cell (re-)selection and synchronizes to cell C2 of eNB BS2 receiving the PCI of cell C2. From the PCI it is determined by the UE that C2 supports the LC feature. It is assumed in this example, that the cell selection results in cell C2 to be selected. The UE stores the determined LC feature information.

Now, while camped on cell C2, UL data triggers establishment of an RRC connection and as a result of the determined and stored LC support information, the UE requests an RRC connection resumption from eNB B2 which according to the embodiment is accepted by the eNB.

At a later point in time the RRC connection is released by BS2 providing a resume ID to the UE. The UE again changes to idle mode and performs cell (re-)selection. Cell C3 of eNB BS3 is received and the UE synchronizes with that cell determining the PCI within the range of PCIs used by cells not supporting the LC feature. It is now assumed that the cell (re-)selection leads to the UE camping on cell C3 of eNB B3 and the UE will store the determined LC feature capability of cell C3.

Now, while camped on cell C3, UL data triggers the establishment of an RRC connection and the UE will according to this invention request the setup of a new RRC connection which prevents the potential failure of an RRC connection resume request.

From this embodiment, it is evident that the efficiency of an RRC connection establishment has been increased by the invention. The determining of the most efficient way to request the establishment of an RRC connection based on the cells capability to support the resumption of an RRC connection from a stored context has lead to the UE selecting the most appropriate message for RRC connection establishment to the respective eNBs.

## Claims

1. A method of operating a user equipment, UE, device suitable for connection to a mobile communications network, the method comprising:
receiving information from a plurality of base stations of the mobile communications network, the information received from a base station providing the UE device with an indication as to whether that base station supports resuming a radio resource control, RRC, connection;
using the information to construct a ranking list of the plurality of base stations according to a suitability of the base stations for RRC connection resumption operation; and
selecting from the ranking list a second base station to which a radio resource control connection resume message is sent for re-establishing an RRC connection previously released by a first base station.

2. The method according to claim 1, wherein the UE device uses additional parameters to determine the ranking list.

3. The method according to claim 2, wherein the UE device applies different threshold values to measurements of cells supporting resuming an RRC connection of a UE and of cells not supporting resuming an RRC connection.

4. The method according to any preceding claim, wherein the information comprises a physical channel identifier, a value of the physical channel identifier indicating whether the base station supports RRC connection resumption.

5. The method according to claim 4, wherein the UE device receives a notification of which physical channel identifiers indicate that a base station supports RRC connection resumption from the first base station while in a connected mode.

6. The method according to claim 5, wherein the notification is a range of physical channel identifiers.

7. The method according to any preceding claim, wherein resuming an RRC connection comprises establishing an RRC connection according to a RAN context previously established between the UE device and the first base station while the UE device was in connected mode and stored in the UE device while the UE device is in idle mode.

8. A method of operating a user equipment, UE, device suitable for connection to a mobile communications network, the method comprising:
receiving context information from a first base station of the mobile communication network and storing the context information in the UE device;
receiving, using the context information, support information from a second base station of the mobile communications network, the support information providing the UE device with an indication as to whether the second base station supports resuming a radio resource control, RRC, connection;
selecting, based on the support information, whether to request from the base station
i) the setup of a new RRC connection in which the context information in the UE device is discarded, and a connection to the second base station is set up based on second context information received from the second base station, or
ii) the resumption of an RRC connection previously released by another base station in which an RRC connection resume request message is transmitted to the second base station, the connection resume request message comprising an identifier of the context information, and a connection to the second base station is set up based on the context information.

9. The method according to claim 8, wherein resuming an RRC connection comprises establishing an RRC connection according to a RAN context previously established between the UE device and the first base station while the UE device was in connected mode and stored in the UE device while the UE device is in idle mode.

10. The method according to claim 8 or claim 9, wherein the context information received from the first base station comprises physical cell identification, PCI, information enabling the UE device to determine whether the second base station supports RRC connection resumption.

## Patentansprüche

1. Verfahren zum Betreiben eines Benutzerausrüstungs(UE)-Geräts, das zur Verbindung mit einem Mobilfunknetz geeignet ist, wobei das Verfahren Folgendes umfasst:
Empfangen von Informationen von mehreren Basisstationen des Mobilfunknetzes, wobei die Informationen, die von einer Basisstation empfangen werden, für das UE-Gerät eine Angabe bereitstellen, ob diese Basisstation die Wiederaufnahme einer Funkressourcensteuerungs(RRC - Radio Resource Control)-Verbindung unterstützt,
Verwenden der Informationen, um eine Rangliste der mehreren Basisstationen gemäß einer Eignung der Basisstationen für eine RRC-Verbindungswiederaufnahmeoperation zu erstellen, und
Auswählen einer zweiten Basisstation aus der Rangliste, an die eine Funkressourcensteuerungsverbindungs-Wiederaufnahmenachricht gesendet wird, um eine RRC-Verbindung wiederherzustellen, die zuvor von der ersten Basisstation gelöst wurde.

2. Verfahren nach Anspruch 1, wobei das UE-Gerät zusätzliche Parameter verwendet, um die Rangliste zu bestimmen.

3. Verfahren nach Anspruch 2, wobei das UE-Gerät an Messungen von Zellen, die eine Wiederherstellung einer RRC-Verbindung einer UE unterstützen, und von Zellen, die keine RRC-Verbindungswiederaufnahme unterstützen, unterschiedliche Grenzwerte anlegt.

4. Verfahren nach einem vorhergehenden Anspruch, wobei die Informationen eine Kennung des physischen Kanals, einen Wert der Kennung des physischen Kanals, der angibt, ob die Basisstation eine RRC-Verbindungswiederaufnahme unterstützt, umfassen.

5. Verfahren nach Anspruch 4, wobei das UE-Gerät eine Benachrichtigung empfängt, welche Kennungen physischer Kanäle angeben, dass eine Basisstation die RRC-Verbindungswiederaufnahme von der ersten Basisstation unterstützt, während sie sich im Verbindungsmodus.

6. Verfahren nach Anspruch 5, wobei die Benachrichtigung ein Bereich von Kennungen physischer Kanäle ist.

7. Verfahren nach einem vorhergehenden Anspruch, wobei die Wiederaufnahme einer RRC-Verbindung das Einrichten einer RRC-Verbindung gemäß einem RAN-Kontext umfasst, der zuvor zwischen dem UE-Gerät und der ersten Basisstation eingerichtet wurde, während sich das UE-Gerät in einem Verbindungsmodus befand, und in dem UE-Gerät gespeichert ist, während sich das UE-Gerät in einem Nichtnutzungsmodus befindet.

8. Verfahren zum Betreiben eines Benutzerausrüstungs(UE)-Geräts, das zur Verbindung mit einem Mobilfunknetz geeignet ist, wobei das Verfahren Folgendes umfasst:
Empfangen von Kontextinformationen von einer ersten Basisstation des Mobilfunknetzes und Speichern der Kontextinformationen in dem UE-Gerät,
Empfangen von Unterstützungsinformationen von einer zweiten Basisstation des Mobilfunknetzes mit Hilfe der Kontextinformationen, wobei die Unterstützungsinformationen für das UE-Gerät eine Angabe bereitstellen, ob die zweite Basisstation die Wiederaufnahme einer Funkressourcensteuerungs(RRC - Radio Resource Control)-Verbindung unterstützt,
Auswählen, ob von der Basisstation Folgendes anzufordern ist, basierend auf den Unterstützungsinformationen:
i) der Aufbau einer neuen RRC-Verbindung, wobei die Kontextinformationen in dem UE-Gerät verworfen werden und eine Verbindung mit der zweiten Basisstation basierend auf zweiten Kontextinformationen, die von der zweiten Basisstation empfangen werden, aufgebaut wird,
ii) die Wiederaufnahme einer RRC-Verbindung, die zuvor von einer anderen Basisstation freigegeben wurde, wobei an die zweite Basisstation eine RRC-Verbindungswiederaufnahmenachricht übermittelt wird, wobei die Verbindungswiederaufnahmenachricht eine Kennung der Kontextinformationen umfasst, und eine Verbindung zu der zweiten Basisstation basierend auf diesen Kontextinformationen aufgebaut wird.

9. Verfahren nach Anspruch 8, wobei die Wiederaufnahme einer RRC-Verbindung das Einrichten einer RRC-Verbindung gemäß einem RAN-Kontext umfasst, der zuvor zwischen dem UE-Gerät und der ersten Basisstation eingerichtet wurde, während sich das UE-Gerät in einem Verbindungsmodus befand, und in dem UE-Gerät gespeichert ist, während sich das UE-Gerät in einem Nichtnutzungsmodus befindet.

10. Verfahren nach Anspruch 8 oder Anspruch 9, wobei die Kontextinformationen, die von der ersten Basisstation empfangen werden, PCI(Physical Cell Identification)-Informationen umfassen, die das UE-Gerät in die Lage versetzen zu bestimmen, ob die zweite Basisstation eine RRC-Verbindungswiederaufnahme unterstützt.

## Revendications

1. Procédé de fonctionnement d'un dispositif d'équipement utilisateur, UE, approprié pour une connexion à un réseau de communication mobile, le procédé comprenant :
la réception d'informations à partir d'une pluralité de stations de base du réseau de communication mobile, les informations reçues à partir d'une station de base fournissant au dispositif d'UE une indication précisant si cette station de base prend en charge la reprise d'une connexion de contrôle de ressources radio, RRC ;
l'utilisation des informations pour élaborer une liste de classement de la pluralité de stations de base en fonction d'un caractère approprié des stations de base pour une opération de reprise de connexion RRC ; et
la sélection à partir de la liste de classement d'une seconde station de base à laquelle un message de reprise de connexion de contrôle de ressource radio est envoyé pour rétablir une connexion RRC libérée précédemment par une première station de base.

2. Procédé selon la revendication 1, dans lequel le dispositif d'UE utilise des paramètres supplémentaires pour déterminer la liste de classement.

3. Procédé selon la revendication 2, dans lequel le dispositif d'UE applique différentes valeurs de seuil à des mesures de cellules prenant en charge la reprise d'une connexion RRC d'un UE et de cellules ne prenant pas charge la reprise d'une connexion RRC.

4. Procédé selon l'une quelconque des revendications précédentes, dans lequel les informations comprennent un identifiant de canal physique, une valeur de l'identifiant de canal physique indiquant si la station de base prend en charge une reprise de connexion RRC.

5. Procédé selon la revendication 4, dans lequel le dispositif d'UE reçoit une notification selon laquelle des identifiants de canal physique indiquent qu'une station de base prend en charge une reprise de connexion RRC à partir de la première station de base pendant qu'il se trouve dans un mode connecté.

6. Procédé selon la revendication 5, dans lequel la notification est une plage d'identifiants de canal physique.

7. Procédé selon l'une quelconque des revendications précédentes, dans lequel la reprise d'une connexion RRC comprend l'établissement d'une connexion RRC en fonction d'un contexte RAN établi précédemment entre le dispositif d'UE et la première station de base pendant que le dispositif d'UE se trouvait dans un mode connecté et stocké dans le dispositif d'UE pendant que le dispositif d'UE se trouve dans un mode veille.

8. Procédé de fonctionnement d'un dispositif d'équipement utilisateur, UE, approprié pour une connexion à un réseau de communication mobile, le procédé comprenant :
la réception d'informations de contexte à partir d'une première station de base du réseau de communication mobile et le stockage des informations de contexte dans le dispositif d'UE ;
la réception, à l'aide des informations de contexte, d'informations de support à partir d'une seconde station de base du réseau de communication mobile, les informations de support fournissant au dispositif d'UE une indication précisant si la seconde station de base prend en charge la reprise d'une connexion de contrôle de ressources radio, RRC ;
la sélection, sur la base des informations prises en charge, pour savoir s'il faut demander à partir de la station de base
i) l'établissement d'une nouvelle connexion RRC dans laquelle les informations de contexte dans le dispositif d'UE sont supprimées, et une connexion à la seconde station de base est établie sur la base des secondes informations de contexte reçues de la seconde station de base, ou
ii) la reprise d'une connexion RRC libérée précédemment par une autre station de base dans laquelle un message de demande de reprise de connexion RRC est transmis à la seconde station de base, le message de demande de reprise de connexion comprenant un identifiant des informations de contexte, et une connexion à la seconde station de base est établie sur la base des informations de contexte.

9. Procédé selon la revendication 8, dans lequel la reprise d'une connexion RRC comprend l'établissement d'une connexion RRC en fonction d'un contexte RAN établi précédemment entre le dispositif d'UE et la première station de base pendant que le dispositif d'UE se trouvait dans un mode connecté et stocké dans le dispositif d'UE pendant que le dispositif d'UE se trouve dans un mode veille.

10. Procédé selon la revendication 8 ou la revendication 9, dans lequel les informations de contexte reçues de la première station de base comprennent des informations d'identification de cellule physique, PCI, permettant au dispositif d'UE de déterminer si la seconde station de base prend en charge une reprise de connexion RRC.
